# EUROPÄISCHE PATENTSCHRIFT

(11) **EP 0 556 736 B1**
(45) Veröffentlichungstag und Bekanntmachung des Hinweises auf die Patenterteilung: **21.05.1997**
(21) Anmeldenummer: 93102213.1
(22) Anmeldetag: 12.02.1993
(51) Int. Cl.: F24D 19/10

(54) **Verfahren zur Steuerung eines Kessels**
Method of controlling a boiler
Procédé pour la commande d'une chaudière

(30) Priorität: 18.02.1992 AT 290/92; 07.12.1992 AT 2410/92; 10.11.1992 DE 4238763
(43) Veröffentlichungstag der Anmeldung: 25.08.1993
(73) Patentinhaber: Joh. Vaillant GmbH u. Co., 42810 Remscheid (DE); n.v. Vaillant s.a., 1620 Drogenbos (BE); VAILLANT S.A.R.L, 94045 Créteil Cedex (FR); VAILLANT Ges.m.b.H, 1231 Wien (AT); Vaillant Ltd., Rochester Kent ME2 4EZ (GB); Vaillant B.V., 1100 DT Amsterdam (NL); Vaillant GmbH, 8953 Dietikon 1 (CH)
(72) Erfinder: Hangauer, Wilfried, Dr., W-5609 Hückeswagen (DE); Friedrich, Peter, W-5632 Wermelskirchen (DE); König, Wolfgang, W-5632 Wermelskirchen (DE); Ortlinghaus, Ulrich, W-5630 Remscheid (DE); Schilling, Jürgen, W-5632 Wermelskirchen (DE); Taag, Jürgen, W-5630 Remscheid (DE)
(74) Vertreter: Heim, Johann-Ludwig, Dipl.-Ing.

(56) Entgegenhaltungen:
- EP-A- 0 019 743
- EP-A- 0 021 516
- DE-A- 3 832 495
- DE-A- 3 838 477
- KLIMAAT BEHEERSING Bd. 11, Nr. 12, Dezember 1982, ZEIST Seiten 301 - 308 ZWANENBURG 'debietregeling van pompen : algemeen gedeelte'

## Beschreibung

Die Erfindung bezieht sich auf ein Verfahren zur Steuerung eines Heizkreises gemäß dem Oberbegriff des unabhängigen Patentanspruchs.

Bei aus der EP-A-0 021 516 und der DE-A-38 32 495 bekannten derartigen Verfahren wird das Heizmedium mittels einer Pumpe während der Betriebszeit des Brenners mit höherer Geschwindigkeit im Umlauf gehalten, als nach dem Abschalten des Brenners. Auf diese Weise ergibt sich während des Betriebes des Brenners ein relativ geringer Temperaturunterschied zwischen dem in den Kessel einströmenden Heizmedium und dem den Kessel verlassenden Heizmedium. Dadurch wird ein Überschreiten der vorgegebenen Vorlauftemperatur des Heizmediums weitgehend vermieden. Nachteilig ist der hohe Energiebedarf der Pumpe, wobei die Pumpe nur für eine Drehzahl optimal in ihrem Wirkungsgrad ausgelegt werden kann und bei jeder anderen Drehzahl ein schlechterer Wirkungsgrad in Kauf genommen werden muß.

Aufgabe der Erfindung ist es, diese Nachteile zu vermeiden und ein Verfahren der eingangs erwähnten Art vorzuschlagen, bei dem sich ein relativ geringer Energiebedarf für die Realisierung der verschiedenen Umlaufgeschwindigkeiten des Heizmediums ergibt.

Erfindungsgemäß wird diese Aufgabe mit den kennzeichnenden Merkmalen des unabhängigen Patentanspruchs gelöst.

Dadurch, daß bei steigender Wärmeanforderung eine zweite Pumpe hydraulisch parallel zugeschaltet wird, kann der Umlauf des Heizwassers zur Erhöhung der Wärmeabgabe auf einfache Weise erhöht werden.

Alternativ können zwei hydraulisch in Reihe geschaltete Pumpen verwendet werden, wobei eine Pumpe mit großer Leistung und eine Pumpe mit kleiner Leistung vorgesehen sind. Die Ansteuerung der beiden Pumpen kann durch eine geeignete Führungsgröße, zum Beispiel die Außentemperatur erfolgen. Der Antrieb der kleineren Pumpe kann dabei so klein dimensioniert werden, daß er nur für die Förderung des Wassers und nicht für ein notwendiges Anlaufmoment ausgelegt ist. Für den Anlauf der kleineren Pumpe kann der Antrieb der großen Pumpe ausgenutzt werden. Die größere Pumpe weist dabei einen ausreichenden Schlupf für die von der kleinen Pumpe umgewälzten Wassermenge auf, wodurch der Aufbau zusätzlicher Druckverluste vermieden wird. Die trotzdem auftretenden zusätzlichen Druckverluste werden durch den höheren Wirkungsgrad der Einzelpumpen ausgeglichen.

Eine Auslegung mindestens einer der beiden Pumpen gemäß den Merkmalen der Patentansprüche 2 oder 3 ermöglicht eine einfache Anpassung des Umlaufes des Heizwassers an die jeweiligen Erfordernisse.

Die Erfindung wird nun anhand der Zeichnung näher erläutert.

Dabei zeigen:
Figur 1 schematisch eine Heizungsanlage mit parallel angeordneten Pumpen,
Figur 2 schematisch eine Heizungsanlage mit seriell angeordneten Pumpen und
Figuren 3 Diagramme zur Erläuterung eines erfindungsgemäßen Verfahrensablaufes.
Gleiche Bezugszeichen bedeuten in allen Figuren gleiche Einzelheiten.

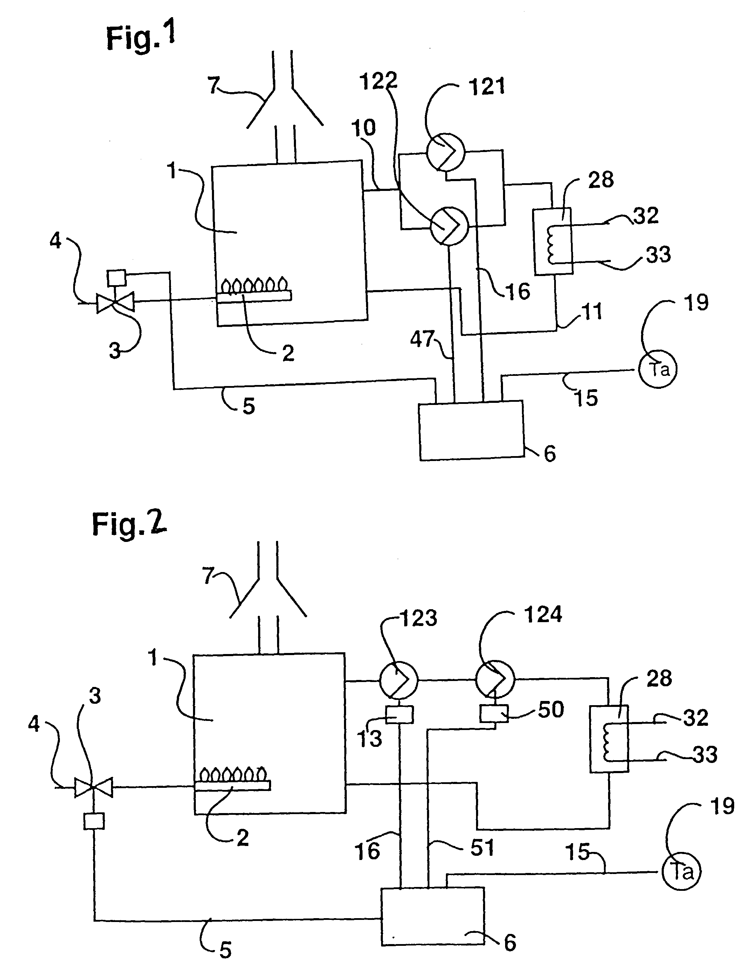

Bei den Ausführungsformen nach den Figuren 1 und 2 ist für die Beheizung eines Kessels 1 ein Brenner 2 vorgesehen. Dieser wird über ein Magnetventil 3 aus einer Gasleitung 4 versorgt. Das Magnetventil 3 ist über eine Leitung 5 mit einer Steuerung 6 oder Regelung verbunden.

Oberhalb des Kessels 1 ist eine Strömungssicherung 7 angeordnet, die bei einer Umkehr der normalen von unten nach oben führenden Strömung der Abgase ein im Sinne eines Schließens des Magnetventiles 3 wirkendes Signal über einen nicht dargestellten Fühler an die Steuerung 6 abgibt.

An dem Kessel 1 sind eine Vorlaufleitung 10 und eine Rücklaufleitung 11 eines Heizkreises angeschlossen, durch den ein Heizmedium strömt. Das Heizmedium gibt Wärme an einen Verbraucher, beispielsweise eine Heizkörperanordnung oder einen Boiler 28, ab. Der Boiler 28 weist dabei bevorzugt einen Sekundärzweig auf, der von zu erwärmendem Brauchwasser durchströmt ist, das über einen Anschluß 33 zuströmt und über eine Leitung 32 mit einer nicht dargestellten Zapfstelle verbunden ist.

Die Steuerung 6 ist weiterhin noch mit einem Außentemperaturfühler 19 verbunden. Somit kann der Durchsatz des Heizmediums in Abhängigkeit von der Außentemperatur gesteuert werden, wobei der Durchsatz mit steigender Außentemperatur sinkt.

Soweit stimmen die Ausführungsformen nach der Figur 1 und der Figur 2 überein.

Bei der Heizungsanlage nach der Figur 1 ist in der Vorlaufleitung 10 eine hydraulische Parallelschaltung zweier Pumpen 121, 122 vorgesehen. Die beiden Pumpen 121, 122 sind über Steuerleitungen 16 und 47 mit der Steuerung 6 verbunden. Verfahrungsgemäß wird bei stillstehendem Brenner 1 und bei einem Betrieb desselben mit geringer Leistung nur eine Pumpe 121 in Betrieb gehalten und erst bei einer erhöhten Wärmeanforderung wird die zweite Pumpe 122 von der Steuerung 6 über die Steuerleitung 16 zugeschaltet. Es ist auch möglich, von der Pumpe 121 auf die andere Pumpe 122 umzuschalten, wenn die Pumpe 122 eine höhere Leistung aufweist als die Pumpe 121.

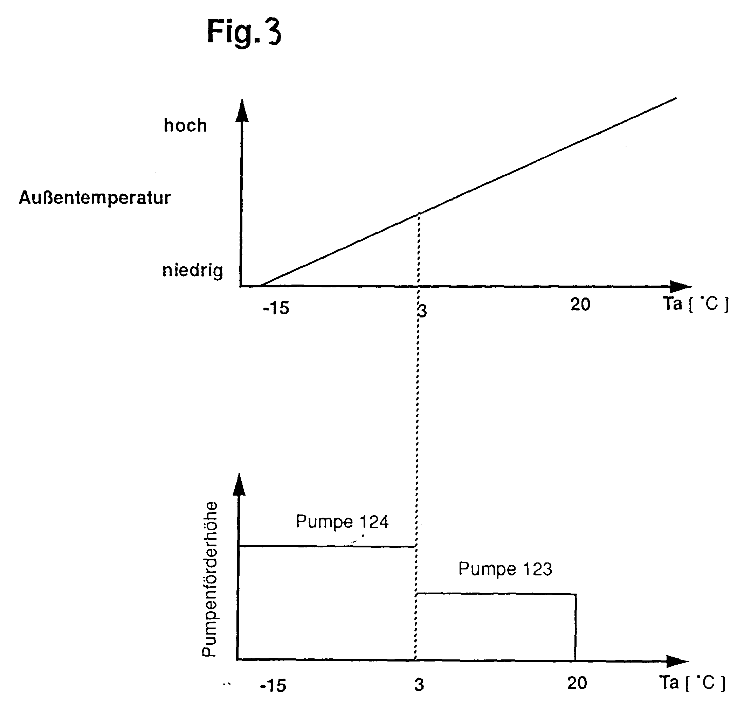

Bei der Heizungsanlage nach der Figur 2 ist eine hydraulische Reihenschaltung einer Pumpe 123 mit einer kleinen Leistung und einer Pumpe 124 mit einer größeren Leistung vorgesehen. Wie aus der Figur 3 zu ersehen ist, wird mit stetig steigender Außentemperatur von der leistungsstärkeren Pumpe 124 auf die leistungsschwächere Pumpe 123 umgeschaltet und letztlich auch diese abgeschaltet. Die Diagramme der Figur 3 sind sinngemäß auch auf einen Betriebsablauf einer Anlage nach der Figur 1 übertragbar.

## Patentansprüche

1. Verfahren zur Steuerung eines Heizkreises, der mittels einer von einem Brenner (2) beheizten Wärmequelle versorgt wird und in dem ein Heizmedium umläuft, wobei der Brenner (2) in Abhängigkeit von der Temperatur des Heizmediums gesteuert ist und wobei das Heizmedium vor dem Erreichen der vorgegebenen Temperatur des Heizmediums mittels mindestens einer Pumpe mit höherem Durchsatz in Umlauf im Heizkreis gehalten wird, als nach dem Abschalten des Brenners (2) nach Erreichen der vorgegebenen Temperatur des Heizmediums, **dadurch gekennzeichnet**, daß zwei hydraulisch parallel oder hydraulisch in Reihe geschaltete Pumpen (121, 122 oder 123, 124) verwendet werden, wobei entweder bei steigender Wärmeanforderung zu der ersten Pumpe (121, 123) die zweite Pumpe (122, 124) zugeschaltet wird oder zwei Pumpen (121, 122 oder 123, 124) mit unterschiedlicher Leistung verwendet werden, die in Abhängigkeit von der Wärmeanforderung gesteuert werden.

2. Verfahren nach Anspruch 1, **dadurch gekennzeichnet**, daß mindestens eine der Pumpen (121, 122; 123, 124) zeitlich getaktet wird, wobei Taktzyklen in Abhängigkeit von der Wärmeanforderung gesteuert werden.

3. Verfahren nach Anspruch 1, **dadurch gekennzeichnet**, daß mindestens eine in ihrer Leistung umschaltbare Pumpe (121, 122; 123, 124) verwendet wird.

## Claims

1. Method of controlling a heating circuit which is supplied from a heat source heated by a burner (2) and in which a heating medium circulates, with the burner (2) being controlled as a function of the temperature of the heating medium and with the heating medium being kept circulating in the heating circuit by at least one pump at a rate that is higher before the heating medium reaches its preset temperature than after the burner (2) has been switched off upon the heating medium having reached its preset temperature, **characterized in that** two pumps (121, 122 or 123,124), hydraulically connected in parallel or in series, are used which are controlled in such a way that, when greater heat is required, either a second pump (122, 124) is brought into circuit in addition to the first pump (121, 123), or two pumps (121, 122 or 123, 124) of different capacity are used which are controlled as a function of heat demand.

2. Method as claimed in Claim 1, **characterized in that** at least one of the pumps (121, 122; 123, 124) is clock-timed and the clock cycles are controlled as a function of heat demand.

3. Method as claimed in Claim 1, **characterized in that** at least one capacity-controllable pump (121,122;123,124) is used.

## Revendications

1. Procédé pour la régulation d'un circuit de chauffage alimenté par une source de chaleur chauffée par un brûleur (2), et dans lequel circule un fluide chauffant, le brûleur (2) étant commandé en fonction de la température du fluide, et la circulation du fluide dans le circuit se faisant, grâce à au moins une pompe, avec un débit plus important avant d'atteindre la température préréglée qu'après l'arrêt du brûleur (2) au moment où cette température est atteinte, **procédé caractérisé par le fait** que deux pompes (121, 122 ou 123, 124) mises hydrauliquement en parallèle ou en série sont prévues, la première pompe (121, 123) étant assistée par la deuxième pompe (122, 124) en cas d'appel de chaleur accrue, ou les deux pompes (121, 122 ou 123, 124) de débit différent étant commandées en fonction des besoins en chaleur.

2. Procédé suivant la revendication 1, **caractérisé par le fait** qu'au moins l'une des pompes (121, 122; 123, 124) est actionnée en discontinu, les temps de fonctionnement étant commandés en fonction des besoins en chaleur.

3. Procédé suivant la revendication 1, **caractérisé par le fait** qu'il est prévu au moins une pompe (121, 122; 123, 124) à débit variable.
